Europäisches Patentamt

European Patent Office

Office européen des brevets

(19)

(11) **EP 0 697 779 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(51) Int Cl.$^7$: **H04M 3/36**, G05B 13/02

(21) Anmeldenummer: **95110381.1**

(22) Anmeldetag: **03.07.1995**

(54) **Verfahren zur Steuerung der Lastabwehr eines Echtzeitrechners**

Procedure to control the load rejection of a real time computer

Procédé pour contrôler le rejet de taches dans un ordinateur temps réel

(84) Benannte Vertragsstaaten:
**AT DE FR GB IT NL SE**

(30) Priorität: **18.07.1994 DE 4425348**

(43) Veröffentlichungstag der Anmeldung:
**21.02.1996 Patentblatt 1996/08**

(73) Patentinhaber: **SIEMENS AKTIENGESELLSCHAFT**
**80333 München (DE)**

(72) Erfinder: **Witte, Martin, Dr.**
**D-81737 München (DE)**

(56) Entgegenhaltungen:
**US-A- 4 974 256**

- **PROCEEDINGS OF THE INTERNATIONAL CONFERENCE ON FUZZY SYSTEMS, SAN DIEGO, MAR. 8 - 12, 1992, Nr. CONF. 1, INSTITUTE OF ELECTRICAL AND ELECTRONICS ENGINEERS, Seiten 281-288, XP 000342890 KHEDKAR P S ET AL 'FUZZY PREDICTION OF TIMESERIES'**
- **DATABASE INSPEC INSTITUTE OF ELECTRICAL ENGINEERS, STEVENAGE, GB Inspec No. 3772098, TAKANO M ET AL 'Application of fuzzy logic controller to the control of overload traffic' & TRANSACTIONS OF THE INSTITUTE OF ELECTRONICS, INFORMATION AND COMMUNICATION ENGINEERS B-I, MAY 1990, JAPAN, Bd. J73B-I, Nr. 5, Seiten 436-443,**

**Beschreibung**

Aus Erfahrung weiß man, daß an Vermittlungsrechner als einem besonderen Typ von Echtzeitrechnern besonders hohe Anforderungen an Ausfallsicherheit und Betriebssicherheit gestellt werden. Die Last auf den für die Vermittlung zuständigen Prozessoren eines Vermittlungsrechners, insbesondere die Call Processing Last, ist typischerweise starken stochastischen Schwankungen unterworfen. Diese Schwankungen haben zumindest mittelfristig (einige Minuten) stochastisch gut beschreibbare Eigenschaften; etwa kennt man ihre Verteilungsfunktion, die sich aus der Unabhängigkeit der Anrufer voneinander und der Art der Bearbeitung eines Vermittlungsauftrages im Rechner ergibt.

Bei Überlast eines Vermittlungssystems muß ein Teil der Teilnehmer (Anrufer) abgeblockt werden, um die ordnungsgemäße Bearbeitung der restlichen akzeptierten Teilnehmer gewährleisten zu können. Ähnliche Fälle sind für andere Echtzeitrechner, die beispielsweise Maschinen in einem Fertigungsbetrieb, oder chemische Prozeßabläufe steuern, denkbar. Der Anteil der abzublockenden Teilnehmer, bzw. abzublockenden Prozesse wird durch einen Lastabwehrgrad festgelegt. Der Lastabwehrgrad kann beispielsweise aus der CPU-Belastung des Prozessors des Echtzeitrechners berechnet werden. Bei Vermittlungsrechnern sollte er besonders so gewählt sein, daß die durchschnittliche Auslastung des Prozessors der angegebenen Nennleistung dieses Rechners entspricht. Bei Vermittlungssystemen wird die Nennleistung üblicherweise aus bedienungstheoretischen Gründen einige Prozent unter der wirklichen CPU-Leistung des Prozessors gewählt. Wegen der eingangs erwähnten Stochastik ist eine Vorhersage des benötigten Lastabwehrgrades der CPU-Auslastung jedoch mit großer Unsicherheit behaftet. Wird der Lastabwehrgrad zu häufig geändert, wird nicht nur der angestrebte Auslastungsgrad des Prozessors gefährdet, sondern die Antwortzeiten verschlechtern sich auch. Antwortzeiten jedoch sind ein wesentliches Qualitätsmerkmal beispielsweise eines Vermittlungsrechners oder jedes anderen Echtzeitrechners. Beispielsweise sind Antwortzeiten auf verschiedene Aufgaben eines Vermittlungsrechners bei gewissen Lasthöhen als Requirement von der zuständigen internationalen Normierungsbehörde, der CCITT, festgeschrieben.

Folgende wichtige Anforderungen lassen sich daraus für ein Verfahren zur Bestimmung eines Lastabwehrgrades ableiten:

a) Die Nennleistung mußt auch in Überlastsituationen erreicht werden
b) Überlast muß schnell erkannt werden
c) Auch bei starkem Überangebot sollen die Antwortzeiten für die akzeptierten Anrufe nicht zu hoch werden.

Diese Anforderungen stellen sich widersprechende Ziele dar. Bei gängigen Lastabwehrverfahren wird beispielsweise die CPU-Belastung des Echtzeitrechners jede Sekunde gemessen und mit der Nennbelastung verglichen. Ist die CPU-Belastung höher als die Nennlast, so wird der Lastabwehrgrad erhöht; ist sie tiefer, wird der Lastabwehrgrad herabgesetzt. Der Grundgedanke besteht also darin, daß der Lastabwehrgrad nach der aktuellen Lastsituation eingestellt wird. Auf diese Weise wird eine schnelle Reaktion der Lastabwehr garantiert. Eine Folge davon ist jedoch, daß neben der betriebsbedingten "natürlichen" Lastschwankungen künstliche Lastschwankungen produziert werden, die aus der Lastregelung resultieren. Bei häufigen Lastschwankungen wird dadurch der stabile Betrieb des Echtzeitrechners bzw. der Vermittlungseinrichtung gefährdet.

Aus der Veröffentlichung "Adaption of the overload regulation method STATOR to multiprocessor controls and simulation results", P. Hanselka, J. Oehlerich, G. Wegmann, ITC 12, Torino, June 1988 ist der Stand der Technik für ein Vermittlungssystem bekannt. Zeitanforderungen lassen sich aus dem CCITT, Red Book, Rec. Q514 ableiten.

Aus der Veröffentlichung US-A-4 974 256 ist ein Überlastkontrollsystem für Telekommunikationsanlagen bekannt, bei dem aktuelle Prozessorlasten erfaßt und gemittelt werden. In Überlastsituationen werden bei dem Überlastkontrollsystem Serviceanforderungen abgewiesen.

Die der Erfindung zugrundeliegende Aufgabe besteht also darin, ein Verfahren zur Steuerung der Lastabwehr eines Echtzeitrechners anzugeben, mit dem ein Lastabwehrgrad so ermittelt und dem Echtzeitrechner vorgegeben wird, daß dieser vorwiegend im Bereich seiner Nennleistung betrieben wird.

Diese Aufgabe wird gemäß den Merkmalen des Patentanspruches 1 gelöst.

Weiterbildungen der Erfindung ergeben sich aus den Unteransprüchen.

Ein besonderer Vorteil des erfindungsgemäßen Verfahrens besteht darin, daß es ein Gedächtnis für die vorangegangenen Lastwerte besitzt. Es wird also in die Lastabwehr des Rechners nur eingegriffen, wenn eine wirkliche Lasterhöhung in Form einer Erhöhung des Mittelwertes stattfindet. Ein weiterer Vorteil ergibt sich daraus, daß durch die Auswertung des Lastmittelwertes und des aktuellen Lastwertes durch Fuzzy-Regeln Schwellenwerte für das Ansprechen der Regelung gleitend definiert werden können. Grundlagen zur Fuzzy Regelung sind in "Zimmermann, H.-J.: Fuzzy Set Theorie and its Applications Kluwer Academic Publishers, Boston 1991" angegeben. Diese hängen in bekannter Weise nur von den Zugehörigkeitsfunktionen und den daraus ermittelten Regelgewichten der einzelnen Fuzzy-Regeln ab.

Vorteilhaft wird bei der Lastabwehrregelung des Echtzeitrechners eine Schwingungsneigung vermieden, indem bei der Lastregelung eine Erhöhung des Lastwertes im Vergleich zu einer Absenkung des Lastwertes langsamer durchgeführt wird. Das heißt, bei einer Absenkung des Lastabwehrgrades wird eventuell mehrere Zeitintervalle gewartet, bis der nächst geringere Lastabwehrgrad zum tragen kommt, während bei einer Erhöhung des Lastabwehrgrades der nächst höhere erforderliche Wert zu jedem Zeitintervall eingestellt wird.

Um einen stabilen Betrieb des Echzeitrechners zu gewährleisten ist es besonders günstig, beim erfindungsgemäßen Verfahren vorgesehen eine Veränderung des Lastabwehrgrades nur durchzuführen, wenn der Lastmittelwert eine vorgegebene Schranke des Lastwertes unter- bzw. überschreitet. Erst nach der entsprechenden Überschreitung dieser Schranken kann die Last durch Vergabe eines Lastabwehrgrades abgesenkt oder erhöht werden, je nachdem was als Maßname zur Einhaltung der Nennleistung erforderlich ist.

Besonders günstig ist es, nach dem erfindungsgemäßen Verfahren den Lastmittelwert in Form eines geometrischen gleitenden Mittels zu ermitteln, da dieses ein optimales Gedächtnisverhalten in Bezug auf die Lastwerte aufweist.

Vorteilhaft ist es im erfindungsgemäßen Verfahren vorgesehen acht Fuzzy-Regeln im Fuzzy-Regler zu verwenden, da so fein abgestuft auf Änderungen des Lastmittelwertes reagiert werden kann und ein stabiler Betrieb des Echtzeitrechners begünstigt wird.

Vorteilhaft sind dem erfindungsgemäßen Verfahren Fuzzy-Regeln in Form einer Matrix für den Fall einer Nennlast von 0.8, 0.7 und 0.95 angegeben, da dies häufige Betriebsfälle von Echtzeitrechnern darstellt.

Besonders günstig ist es, mit dem erfindungsgemäßen Verfahren einen Vermittlungsrechner zu betreiben, da an diese Rechner besonders hohe Anforderungen an stabilen Betrieb und Ausfallsicherheit gestellt werden.

Im folgenden wird die Erfindung anhand einer Figur weiter erläutert.

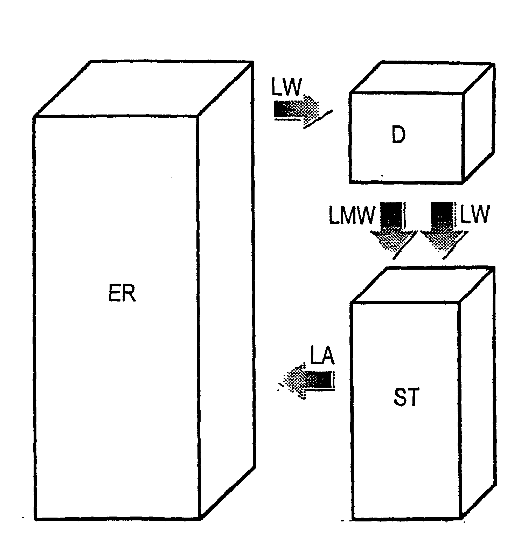

Figur 1 zeigt ein Beispiel einer Anordnung zur Durchführung des erfindungsgemäßen Verfahrens. Dargestellt ist dort ein Echtzeitrechner ER, welcher eine Lastabwehr besitzt. Zur Ermittlung des aktuellen Lastwertes LW ist eine Diagnoseeinheit D vorgesehen. In dieser Diagnoseeinheit D wird aus verschiedenen Lastwerten LW der Lastmittelwert LMW gebildet, indem das geometrische Mittel LMW aus verschiedenen Lastwerten LW, welche sich aus beispielsweise periodischen Ermittlung der aktuellen Lastwerte am Echtzeitrechner ER ergeben, bestimmt wird. Dieser Lastmittelwert LMW und der aktuelle Lastwert LW(t) wird einer Steuerung ST zugeführt, in welcher sich ein Fuzzy-Regler oder Fuzzy-Controller befindet, welcher diese Werte mit Hilfe von Fuzzy-Regeln auswertet und daraus einen Lastabwehrfaktor LA ableitet. Die CPU-Last läßt sich dafür beispielsweise durch Zählen der CPU-Idle-Zyklen, oder durch Überwachung des Prozessorbusses ermitteln. Dieser Lastabwehrfaktor LA wird dem Echtzeitrechner ER zugeführt und der steuert in Abhängigkeit dieses Lastabwehrfaktors seine Lastabwehr. Beispiele für solche Echtzeitrechner sind Kommunikationsrechner durch die Teilnehmerverbindungen hergestellt werden, oder Fertigungssteuerungsrechner durch welche komplexe Fertigungs- oder Produktionsabläufe gesteuert werden, oder Verkehrsleitrechner, welche komplexe Verkehrsabläufe sicherstellen sollen. Um zu dem erfindungsgemäßen Regelverfahren zu kommen, kann die Situation zunächst mathematisch formuliert dargestellt werden. Das zugrundeliegende Entscheidungsproblem läßt sich mit Hilfe der statistischen Testtheorie wie folgt präzisieren.

a) mathematische Modellierung des Problems

Sei LMW der (langfristige) Mittelwert der bearbeitenden Last, LW(t) die tatsächlich gemessene Last in einer kurzen Zeitperiode (beispielsweise 1 Sekunde), indiziert mit t, und 11 bzw. 12 die untere bzw. obere Regelgrenze. Die Regelgrenzen können dabei von dem Mittelwert der Last abhängen. Dann ist

$$P(LW(t)<l_1|LMW)$$

die Wahrscheinlichkeit, daß die Last LW(t) der letzten Sekunde t kleiner als die untere Regelschranke $l_1$ ist, wenn die durchschnittliche Last LMW beträgt.

$$P(LW(t)>l_2|LMW)$$

die Wahrscheinlichkeit, daß die Last LW(t) der letzten Sekunde größer als die obere Regelschranke $l_2$ ist, wenn die durchschnittliche Last LMW beträgt.

Das Ziel ist dabei, den Lastabwehrgrad möglichst nur dann zu verändern, wenn sich der Mittelwert LMW der ankommenden Last verändert hat oder nicht in der Nähe der angestrebten Nennlast liegt. Es liegt also ein Testproblem mit der Ausgangshypothese $H_0$: "LMW hat sich nicht verändert" gegen die Alternativhypothese $H_1$: "LMW hat sich verändert" vor; die Hypothesen werden mittels der Prüfgröße LW(t) und dem Annahmeintervall $[l_1, l_2]$ entschieden. Aus

der Annahme bzw. Ablehnung der Hypothese $H_0$ und den Werten von LMW und LW(t) erfolgt dann eine geeignete Aktion. Die Wahrscheinlichkeiten der Fehler 1. Art (Wahrscheinlichkeit, auf eine Änderung von LMW zu schließen, obwohl keine vorliegt) und 2. Art (Wahrscheinlichkeit, auf keine Änderung von LMW zu schließen, obwohl eine vorliegt) hängen von der Wahl der Grenzen $I_1$ und $I_2$ ab und damit von der Verteilung von LW(t) und LMW. Der Fehler 1. Art bedeutet praktisch meist eine unnötige Änderung des Lastabwehrgrades, der Fehler 2. Art eine nicht erfolgte aber eigentlich notwendige Änderung des Lastabwehrgrades. Häufige Fehler 1. Art bedeuten häufige unnötige Änderungen des Lastabwehrgrades und damit schlechte Antwortzeiten. Fehler 2. Art gefährden die Reaktionsgschwindigkeit der Lastabwehr. Eine Verringerung des Fehlers 1. Art zieht im allgemeinen eine Vergrößerung des Fehlers 2. Art nach sich.

b) Das Verfahren

Sowohl die akzeptable Größe der Fehler 1. und 2. Art, als auch die notwendige Aktion hängen von der durchschnittlichen Lasthöhe LMW ab. Man hat also ein dreidimensionales Regelgebirge, in dem, abhängig von LMW und LW(t), eine gewisse Aktion (Lastabwehrgradveränderung) zu erfolgen hat. Eine analytische Darstellung der Grenzen $I_1$ und $I_2$ in Abhängigkeit von LMW und der notwendigen Aktion in Abhängigkeit von LMW und dem Ausgang des Testes ist jedoch relativ schwierig in der Erstellung, umständlich in der Handhabung und wenig illustrativ in der Praxis. Zudem hängt sie von dem jeweiligen Lastprofil also den Eigenschaften der Last des jeweiligen Echtzeitrechners im Feld ab. Mit Hilfe eines Fuzzy-Reglers bzw. Fuzzy Controllers lassen sich solche Regelgebirge jedoch leicht darstellen. Dabei werden die zwei Eingangsparameter LMW und LW(t) mit Hilfe einer Menge von Regeln zu einer empfohlenen Veränderung des Lastabwehrgrades verarbeitet. Das neuartige Verfahren besteht also darin, daß ein Testverfahren zur Lastabwehr eines Vermittlungsrechners verwendet wird, und daß dieses Testverfahren mit Hilfe eines Fuzzy Controllers realisiert wird. Als Eingangsparameter im Fuzzy Controller werden beispielsweise mindestens der geometrisch gleitende Durchschnitt:

$$LMW_n(t) = \frac{((n-1) \times LMW_n(t-1) + LW(t))}{n} \quad = \quad \frac{1}{n}\sum_{i=1}^{\infty}\left(\frac{n-1}{n}\right)^i \times LW(t-i)$$

und die Last LW(t) des Kontrollintervalls [t-1, t] verwendet. Beispielsweise dauert ein Kontrollintervall 1 Sekunde. Das erfindungsgemäße Verfahren wird beispielsweise am Ende jedes Kontrollintervalles durchgeführt, um einen neuen Lastabwehrgrad zu berechnen. Der gleitende Durchschnitt $LMW_n(t)$ wird als Schätzer der Hypothese $H_0$ im Sinne der obigen Theorie verwendet. Er berechnet also den vermuteten langfristigen Mittelwert LMW. Diese Vermutung wird mit Hilfe der Prüfgröße LW(t) bestätigt oder abgelehnt. Daraus ergibt sich die zu wählende Aktion in Bezug auf den Lastabwehrgrad LA.

Im erfindungsgemäßen Verfahren werden die Grenzen beispielsweise nicht explizit als Funktion von $LMW_n$(t) angegeben, was zu einer Art Dipstickverfahren mit variablen Regelgrenzen in Abhängigkeit von LMW führen würde, sondern implizit durch eine Menge von Regeln festgelegt. Die Regeln beschreiben das gewünschte Verhalten des Reglers und haben damit stark intuitiven Charakter. Wenn das Regelergebnis nicht den Erwartungen entspricht, lassen sie sich entsprechend abändern. Damit sind sie leicht an unterschiedliche Rechnertypen und unterschiedliche Lastanforderungen anpaßbar. Beispielsweise ergeben sich die Testgrenzen so nicht explizit aus der Formulierung des Reglers, sondern implizit aus den Regeln.

Dabei können die Regeln entweder verbal oder in Matrixform angegeben werden. In der Regel werden für Fuzzy Logik Dreiecks-Zugehörigkeitsfunktionen und die Maximums- bzw. Minimumsfunktion als fuzzy-logisches "und" bzw. "oder" verwendet. Die Verknüpfung mehrerer Fuzzy Aussagen geschieht beispielsweise mit Hilfe des normierten gewichteten Mittels. Aus Gründen der Einfachheit kann dieses gewählt werden, jedoch sind auch andere Fuzzy-Logik Realisierungen denkbar. Um Schwingungen des Reglers sicher zu vermeiden, wird beispielsweise zusätzlich die Abnahme der Lastabwehr gedämpft, indem lediglich alle 4 Sekunden eine Abnahme gestattet ist, falls das Regelintervall eine 1 Sekunde beträgt. Dieser Wert kann durch eine Analyse des Regelkreises (Prozessor und Regler) festgestellt werden und hängt in erster Linie von der Reaktionsgeschwindigkeit des Prozessors auf eine Regelaktion ab. Bei herkömmlichen Verfahren führt eine solche Dämpfung zu einem Absenken der bearbeiteten Last von etwa 20 % unter die angestrebte Nennlast. Durch die Einbeziehung der durchschnittlichen Auslastung kann in dem erfindungsgemäßen Verfahren die Einhaltung der Nennlast im Hochlastbetrieb sichergestellt werden.

Dieses Verfahren läßt sich im Prinzip auf jedes zu regelnde System mit starken stochastischen Einflüssen anwenden. Die Wahl der Schätzer und der Prüfgröße, die in der Fuzzy-Regelung verwendet werden, sowie die Aktionen, die bei Annahme oder Ablehnung der Hypothese $H_0$ zu wählen sind, hängen dabei von der speziellen Art des Systems ab.

Für das erfindungsgemäße Verfahren kann der Lastabwehrfaktor LA beispielsweise durch eine Zahl von 0 bis 6 vorgegeben werden. Dabei bedeutet der Lastabwehrfaktor LA=0 gar keine Lastabwehr, also alle ankommende Last wird bearbeitet; Lastabwehrfaktor LA=6 bedeutet dabei völlige Lastabwehr; es wird keine neue Last angenommen, die zurückgewiesen werden kann. Dieses Beispiel erhebt jedoch keinen Anspruch auf Vollständigkeit, es können auch andere Zahlenbereiche, die größer oder kleiner sind für den Lastabwehrfaktor LA gewählt werden. Mit dem erfindungsgemäßen Verfahren soll in Abhängigkeit der zugeführten Werte LW und LMW bestimmt werden um wieviel der Lastabwehrfaktor verändert wird, wobei die angestrebte Nennlast des Systems zu berücksichtigen ist. Bei den beanspruchten Fuzzy Regeln handelt es sich um Regeln, die für eine Nennlast von 0.8, 0.7 und 0.95 gelten. Dabei handelt es sich jedoch lediglich um bevorzugte Ausführungsformen. Es sind auch Regelverfahren denkbar, die für andere Nennlastbereiche optimiert sind. Das heißt, es sind entsprechend angepaßte Fuzzy Regelsätze denkbar mit denen andere Echtzeitrechner mit anderen Nennlasten optimal betrieben werden können. Die angestrebte Nennlast für Vermittlungsrechner wird beispielsweise in Erl angegeben. Beispielsweise gilt folgende Unterteilung für verbalisierte Bezeichnung des Lastwertes LW.

| | |
|---|---|
| <0.5 | niedrige Last |
| 0.6 | mittlere Last |
| 0.7 | Hochlast |
| 0.8 | Nennlast |
| 0.85 | leichte Überlast |
| 0.9 | Überlast |
| 0.95 | starke Überlast |
| 1.0 | sehr starke Überlast. |

Die verbalisierte Zuordnung der Lastabwehrveränderungen LA sei wie folgt:

| | |
|---|---|
| -1 | verringere Lastabwehr |
| -0.5 | verringere Lastabwehr ein wenig |
| 0 | keine Veränderung der Lastabwehr |
| +0.5 | erhöhe Lastabwehr leicht |
| +1 | erhöhe Lastabwehr |
| +2 | erhöhe Lastabwehr stark |
| +3 | ziehe Notbremse |

Für das erfindungsgemäße Verfahren ist es völlig unerheblich, ob durch den Fuzzy Regler eine Veränderung des Lastabwehrfaktors LA oder der absolute Lastabwehrfaktor LA ermittelt wird. Hier in diesem Beispiel werden Veränderungen des Lastabwehrfaktors durch Auswertung der Fuzzy Regeln abgeleitet. Es ist aber auch denkbar, daß durch den Fuzzy Controller ein Absolutwert von LA berechnet wird. Ein Beispiel einer Fuzzy Regel läutet wie folgt:

"Wenn die durchschnittliche Last niedrig und die Überlast der letzten Auswertungsperiode sehr stark ist, so ziehe die Notbremse". Diese Regel begründet sich darin, daß dann höchstwahrscheinlich eine plötzliche starke Lasterhöhung vorliegt, vor der das System geschützt werden muß. Falls nun beispielsweise der Lastmittelwert LMW 0.75 und der Lastwert 0.99 beträgt, dann ergeben sich folgende Wahrheitswerte:

$W(LMW_n(t)$ in Überlast$) = 0.6$
$W(LMW_n(t)$ in starker Überlast$) = 0.4$
$W(LW(t)$ in Überlast$) = 0.2$
$W(LW(t)$ in starker Überlast$) = 0.8$

Daraus folgen beispielsweise vier Regeln mit positivem Wahrheitsgehalt und daraus folgende Aktionen:

$W(LMW_n(t)$ in Überlast und $LW(t)$ in Überlast$) = 0.2$, Aktion "0"
$W(LMW_n(t)$ in Überlast und $LW(t)$ in starker Überlast$) = 0.6$, Aktion "+0.5"
$W(LMW_n(t)$ in starker Überlast und $LW(t)$ in Überlast$) = 0.2$, Aktion "+0.5"
$W(LMW_n(t)$ in starker Überlast und $LW(t)$ in starker Überlast$) = 0.4$, Aktion "+1"

Die mit dem Wahrheitswert gewichtete normierte Summe der Aktionen ist

$$(0.2 \times 0 + 0.6 \times 0.5 + 0.2 \times 0.5 + 0.4 \times 1)/1.6 = 0.5$$

Die errechnete Aktion hat den Wert 0.5; da vorzugsweise ganzzahlige Aktionen in diesem System möglich sind, ergibt sich durch Rundung die Aktion "+1".

**Patentansprüche**

1.  Verfahren zur Steuerung der Lastabwehr eines Echtzeitrechners,

    a) bei dem periodisch die aktuelle Last des Echtzeitrechners (ER) als Lastwert (LW) bestimmt und für eine Weiterverarbeitung festgehalten wird,
    b) bei dem aus mindestens zwei Lastwerten (LW) ein Lastmittelwert (LMW) gebildet wird,
    c) bei dem der Lastwert (LW) und der Lastmittelwert (LMW) durch Fuzzy-Regeln ausgewertet werden und dabei eine Laststeuergröße (LA) ermittelt wird, wobei

    -   für den Lastwert (LW) erste Zugehörigkeiten zu vorgegebenen Lastzuständen des Echtzeitrechners ermittelt werden,
    -   für den Lastmittelwert (LMW) zweite Zugerhörigkeiten zu den vorgegebenen Lastzuständen ermittelt werden,
    -   die ersten und die zweiten Zugehörigkeiten zu den Lastzuständen unter Verwendung der Fuzzy-Regeln ausgewertet werden, wobei dritte Zugehörigkeiten zu vorgegebenen Lastabwehraktionen bestimmt werden und
    -   aus den dritten Zugehörigkeiten zu den Lastabwehraktionen die Laststeuergröße (LA) ermittelt wird,

    d) bei dem die Laststeuergröße (LA) dem Echtzeitrechner zur Steuerung der Lastabwehr zugeführt wird.

2.  Verfahren nach Anspruch 1, bei dem zur Vermeidung von Schwingungen bei einer Lastregelung eine Erhöhung des Lastwertes (LW) im Vergleich zu einer Absenkung des Lastwertes (LW) langsamer durchgeführt wird.

3.  Verfahren nach einem der vorangehenden Ansprüche, bei dem die Lastabwehr nur durchgeführt wird, wenn der Lastmittelwert (LMW) eine vorgegebene Schranke über-, bzw. unterschreitet.

4.  Verfahren nach einem der vorangehenden Ansprüche, bei dem als Lastmittelwert (LMW) der geometrisch gleitende Mittelwert mit folgender Formel bestimmt wird:

$$LMW_n(t) = \frac{((n-1) \times LMW_n(t-1) + LW(t))}{n} \quad = \quad \frac{1}{n} \sum_{i=1}^{\infty} (\frac{n-1}{n})^i \times LW(t-i)$$

    mit:

    LMW$_n$(0):    =0
    LW(t):         Lastwert zum Zeitpunkt t
    n:             Anzahl von Zeitpunkten t, über welche gemittelt wird

5.  Verfahren nach einem der vorangehenden Ansprüche, bei dem ein Fuzzy-Controller mindestens folgende Fuzzy-Regeln ausführt:

    wenn LW und LMW niedrig, dann verringere LAW
    wenn LW und LMW mittel, dann verringere LAW ein wenig
    wenn LW und LMW Hochlast, dann verringere LAW ein wenig
    wenn LW und LMW Nennlast, dann lasse LAW gleich
    wenn LW und LMW leichte Überlast, dann erhöhe LAW ein wenig
    wenn LW und LMW Überlast, dann erhöhe LAW

wenn LW und LMW starke Überlast, dann erhöhe LAW stark
wenn LW und LMW sehr starke Überlast, dann erhöhe LAW sehr stark

mit:

LW      Lastwert
LMW    Lastmittelwert
LAW    Lastabwehr

**6.** Verfahren nach einem der vorangehenden Ansprüche mit mindestens folgenden Fuzzy-Regeln bei einer Nennlast von 0.8:

| LW(t) / LMW(t) | 0.5 | 0.6 | 0.7 | 0.8 | 0.85 | 0.9 | 0.95 | 1.05 |
|---|---|---|---|---|---|---|---|---|
| 0.5 | -1 | -1 | -1 | 0 | 1 | 1 | 2 | 3 |
| 0.6 | -1 | -1 | -1 | -0.5 | 0 | 0 | 1 | 1 |
| 0.7 | -1 | -1 | -1 | -0.5 | 0 | 0 | 1 | 1 |
| 0.8 | -1 | -0.5 | -0.5 | 0 | 0 | 0 | 0 | 1 |
| 0.85 | -1 | -0.5 | 0 | 0 | 0 | 0 | 0 | 1 |
| 0.9 | -0.5 | 0 | 0 | 0 | 0 | 0 | 0.5 | 1 |
| 0.95 | -0.5 | 0 | 0 | 0 | 0 | 0.5 | 1 | 2 |
| 1.0 | 0 | 0 | 0 | 0 | 0 | 1 | 1 | 2 |

**LA →**

wobei bei den Fuzzy-Regeln die Laststeuergrößen LA bedeuten:

| LA | -1 | verringere Lastabwehr |
|---|---|---|
| LA | -0.5 | verringere Lastabwehr ein wenig |
| LA | 0 | keine Veränderung der Lastabwehr |
| LA | +0.5 | erhöhe Lastabwehr leicht |
| LA | +1 | erhöhe Lastabwehr |
| LA | +2 | erhöhe Lastabwehr stark |
| LA | +3 | ziehe Notbremse. |

**7.** Verfahren nach einem der Ansprüche 1 bis 5, mit mindestens folgenden Fuzzy-Regeln bei einer Nennlast von 0.7:

| LW(t) LMW$_n$(t) | 0.4 | 0.5 | 0.6 | 0.7 | 0.8 | 0.85 | 0.9 | 0.95 |
|---|---|---|---|---|---|---|---|---|
| 0.5 | -1.5 | -1 | -1 | -1 | 0 | 1 | 1 | 2 |
| 0.6 | -1.5 | -1 | -1 | -1 | -0.5 | 0 | 0 | 1 |
| 0.7 | -1.5 | -1 | -1 | -1 | -0.5 | 0 | 0 | 1 |
| 0.8 | -1 | -1 | -0.5 | -0.5 | 0 | 0 | 0 | 0 |
| 0.85 | -1 | -1 | -0.5 | 0 | 0 | 0 | 0 | 0 |
| 0.9 | -0.5 | -0.5 | 0 | 0 | 0 | 0 | 0 | 0.5 |
| 0.95 | -0.5 | -0.5 | 0 | 0 | 0 | 0 | 0.5 | 1 |
| 1.0 | 0 | 0 | 0 | 0 | 0 | 0 | 1 | 1 |

LA ↘

wobei bei den Fuzzy-Regeln die Laststeuergrößen LA bedeuten:

| LA | -1 | verringere Lastabwehr |
|---|---|---|
| LA | -0.5 | verringere Lastabwehr ein wenig |
| LA | 0 | keine Veränderung der Lastabwehr |
| LA | +0.5 | erhöhe Lastabwehr leicht |
| LA | +1 | erhöhe Lastabwehr |
| LA | +2 | erhöhe Lastabwehr stark |
| LA | +3 | ziehe Notbremse. |

**8.** Verfahren nach einem der Ansprüche 1 bis 5, mit mindestens folgenden Fuzzy-Regeln bei einer Nennlast von 0.95:

| LW(t) LMW$_n$(t) | 0.6 | 0.7 | 0.8 | 0.85 | 0.9 | 0.95 | 1.0 | 1.05 |
|---|---|---|---|---|---|---|---|---|
| 0.5 | -2 | -1.5 | 0 | 1 | 1 | 2 | 2.5 | 3 |
| 0.6 | -1.5 | -1 | -0.5 | 0 | 0 | 1 | 2 | 1 |
| 0.7 | -1 | -1 | -0.5 | 0 | 0 | 1 | 1.5 | 1 |
| 0.8 | -1 | -1 | 0 | 0 | 0 | 0 | 1 | 1 |
| 0.85 | -1 | -1 | 0 | 0 | 0 | 0 | 0.5 | 1 |
| 0.9 | -0.5 | -0.5 | 0 | 0 | 0 | 0.5 | 0 | 1 |
| 0.95 | -0.5 | 0 | 0 | 0 | 0.5 | 1 | 1.5 | 2 |
| 1.0 | 0 | 0 | 0 | 0 | 1 | 1 | 1.8 | 2 |

LA ↘

wobei bei den Fuzzy-Regeln die Laststeuergrößen LA bedeuten:

| LA | -1 | verringere Lastabwehr |
|---|---|---|
| LA | -0.5 | verringere Lastabwehr ein wenig |
| LA | 0 | keine Veränderung der Lastabwehr |
| LA | +0.5 | erhöhe Lastabwehr leicht |
| LA | +1 | erhöhe Lastabwehr |

(fortgesetzt)

| LA | +2 | erhöhe Lastabwehr stark |
|----|----|-------------------------|
| LA | +3 | ziehe Notbremse. |

9. Verfahren nach einem der vorangehenden Ansprüche, bei dem als Echtzeitrechner ein Vermittlungsrechner für Kommunikationsteilnehmer verwendet wird.

**Claims**

1. Method for controlling the load rejection of a real-time computer,

   a) in the case of which the current load of the real-time computer (ER) is determined periodically as load value (LW) and retained for further processing,
   b) in the case of which a mean load value (LMW) is formed from at least two load values (LW),
   c) in the case of which the load value (LW) and the mean load value (LMW) are evaluated by fuzzy rules and, in the process, a load control variable (LA) is determined, in which

   - first memberships of prescribed load states of the real-time computer are determined for the load value (LW),
   - second memberships of the prescribed load states are determined for the mean load value (LMW),
   - the first and the second memberships of the load states are evaluated using the fuzzy rules, third memberships of prescribed load rejection actions being determined, and
   - the load controlled variable (LA) is determined from the third memberships of the load rejection actions, and

   d) in the case of which the load controlled variable (LA) is fed to the real-time computer for controlling the load rejection.

2. Method according to Claim 1, in which raising the load value (LW) is carried out more slowly by comparison with lowering the load value (LW) in order to avoid oscillations during load regulation.

3. Method according to one of the preceding claims, in which the load rejection is carried out only when the mean load value (LMW) overshoots or undershoots a prescribed bound.

4. Method according to one of the preceding claims, in which the geometrically sliding mean value is determined as the mean load value (LMW) with the aid of the following formula:

$$LMW_n(t) = \frac{((n-1) \times LMW_n(t-1) + LW(t))}{n} \quad = \quad \frac{1}{n} \sum_{i=1}^{\infty} \left(\frac{n-1}{n}\right)^i \times LW(t-i)$$

where:

LMW$_n$(0): = 0
LW(t): Load value at instant t
n: number of instants t over which averaging is conducted

5. Method according to one of the preceding claims, in which a fuzzy controller executes at least the following fuzzy rules:

   if LW and LMW are low, then reduce LAW
   if LW and LMW are average, then reduce LAW a little
   if LW and LMW are high load, then reduce LAW a little
   if LW and LMW are nominal load, then leave LAW the same

if LW and LMW are slight overload, then raise LAW a little
if LW and LMW are overload, then raise LAW
if LW and LMW are strong overload, then raise LAW strongly
if LW and LMW are very strong overload, then raise LAW very strongly

where:

LW is load value
LMW is mean load value
LAW is load rejection

**6.** Method according to one of the preceding claims having at least the following fuzzy rules for a nominal load of 0.8:

| $LW(t)$ / $LMW_n(t)$ | 0.5 | 0.6 | 0.7 | 0.8 | 0.85 | 0.9 | 0.95 | 1.05 |
|---|---|---|---|---|---|---|---|---|
| 0.5 | −1 | −1 | −1 | 0 | 1 | 1 | 2 | 3 |
| 0.6 | −1 | −1 | −1 | −0.5 | 0 | 0 | 1 | 1 |
| 0.7 | −1 | −1 | −1 | −0.5 | 0 | 0 | 1 | 1 |
| 0.8 | −1 | −0.5 | −0.5 | 0 | 0 | 0 | 0 | 1 |
| 0.85 | −1 | −0.5 | 0 | 0 | 0 | 0 | 0 | 1 |
| 0.9 | −0.5 | 0 | 0 | 0 | 0 | 0 | 0.5 | 1 |
| 0.95 | −0.5 | 0 | 0 | 0 | 0 | 0.5 | 1 | 2 |
| 1.0 | 0 | 0 | 0 | 0 | 0 | 1 | 1 | 2 |

the load controlled variables LA signifying in the case of the fuzzy rules:

| LA | -1 | reduce load rejection |
|---|---|---|
| LA | -0.5 | reduce load rejection a little |
| LA | 0 | no variation in the load rejection |
| LA | +0.5 | raise load rejection slightly |
| LA | +1 | raise load rejection |
| LA | +2 | raise rejection strongly |
| LA | +3 | apply emergency brake. |

**7.** Method according to one of Claims 1 to 5, having at least the following fuzzy rules in the case of a nominal load of 0.7:

| $LW(t)$ / $LMW_n(t)$ | 0.4 | 0.5 | 0.6 | 0.7 | 0.8 | 0.85 | 0.9 | 0.95 |
|---|---|---|---|---|---|---|---|---|
| 0.5 | −1.5 | −1 | −1 | −1 | 0 | 1 | 1 | 2 |
| 0.6 | −1.5 | −1 | −1 | −1 | −0.5 | 0 | 0 | 1 |
| 0.7 | −1.5 | −1 | −1 | −1 | −0.5 | 0 | 0 | 1 |
| 0.8 | −1 | −1 | −0.5 | −0.5 | 0 | 0 | 0 | 0 |
| 0.85 | −1 | −1 | −0.5 | 0 | 0 | 0 | 0 | 0 |
| 0.9 | −0.5 | −0.5 | 0 | 0 | 0 | 0 | 0 | 0.5 |
| 0.95 | −0.5 | −0.5 | 0 | 0 | 0 | 0 | 0.5 | 1 |
| 1.0 | 0 | 0 | 0 | 0 | 0 | 0 | 1 | 1 |

the load controlled variables LA signifying in the case of the fuzzy rules:

| LA | -1 | reduce load rejection |
|---|---|---|
| LA | -0.5 | reduce load rejection a little |
| LA | 0 | no variation in load rejection |
| LA | +0.5 | raise load rejection slightly |
| LA | +1 | raise load rejection |
| LA | +2 | raise load rejection strongly |
| LA | +3 | apply emergency brake. |

**8.** Method according to one of Claims 1 to 5, having at least the following fuzzy rules in the case of a nominal load of 0.95:

| LW(t) / $LMW_n(t)$ | 0.6 | 0.7 | 0.8 | 0.85 | 0.9 | 0.95 | 1.0 | 1.05 |
|---|---|---|---|---|---|---|---|---|
| 0.5 | -2 | -1.5 | 0 | 1 | 1 | 2 | 2.5 | 3 |
| 0.6 | -1.5 | -1 | -0.5 | 0 | 0 | 1 | 2 | 1 |
| 0.7 | -1 | -1 | -0.5 | 0 | 0 | 1 | 1.5 | 1 |
| 0.8 | -1 | -1 | 0 | 0 | 0 | 0 | 1 | 1 |
| 0.85 | -1 | -1 | 0 | 0 | 0 | 0 | 0.5 | 1 |
| 0.9 | -0.5 | -0.5 | 0 | 0 | 0 | 0.5 | 0 | 1 |
| 0.95 | -0.5 | 0 | 0 | 0 | 0.5 | 1 | 1.5 | 2 |
| 1.0 | 0 | 0 | 0 | 0 | 1 | 1 | 1.8 | 2 |

the load controlled variables LA signifying in the case of the fuzzy rules:

| LA | -1 | reduce load rejection |
|---|---|---|
| LA | -0.5 | reduce load rejection a little |
| LA | 0 | no variation in load rejection |
| LA | +0.5 | raise load rejection slightly |
| LA | +1 | raise load rejection |
| LA | +2 | raise load rejection strongly |
| LA | +3 | apply emergency brake |

**9.** Method according to one of the preceding claims, in which a switching computer for communication subscribers is used as real time computer.

**Revendications**

**1.** Procédé pour la commande du délestage de charge d'une unité centrale de traitement en temps réel,

a) dans lequel on détermine de manière périodique la charge actuelle de l'unité centrale de traitement en temps réel (ER) à titre de valeur de charge (LW) et on la conserve pour un traitement ultérieur,
b) dans lequel, , on forme une valeur de charge moyenne (LMW), à partir d'au moins deux valeurs de charge (LW)
c) dans lequel on soumet à une évaluation la valeur de charge (LW) et la valeur de charge moyenne (LMW) via des règles basées sur la logique floue et on détermine en l'occurrence une grandeur de commande de charge (LA),

- en déterminant, pour la valeur de charge (LW), des premières appartenances à des états de charge prédéfinis de l'unité centrale de traitement en temps réel,
- en déterminant, pour la valeur de charge moyenne (LMW), des deuxièmes appartenances aux états de charge prédéfinis,

- en soumettant à une évaluation les premières et les deuxièmes appartenances aux états de charge en utilisant les règles basées sur la logique floue, des troisièmes appartenances à des actions prédéfinies de délestage de charge étant déterminées, et
- en déterminant à partir des troisièmes appartenances aux actions de délestage de charge, la grandeur de commande de charge (LA),

  d) dans lequel on achemine la grandeur de commande de charge (LA) à l'unité centrale de traitement en temps réel pour la commande du délestage de charge.

2. Procédé selon la revendication 1, dans lequel, pour éviter des oscillations lors d'un réglage de la charge, une élévation de la valeur de charge (LW) se déroule plus lentement qu'une diminution de la valeur de charge (LW).

3. Procédé selon l'une quelconque des revendications précédentes, dans lequel on effectue le délestage de charge uniquement lorsque la valeur moyenne de charge (LMW) dépasse vers le haut, respectivement vers le bas, un seuil prédéfini.

4. Procédé selon l'une quelconque des revendications précédentes, dans lequel on détermine, à titre de valeur moyenne de charge (LMW), la valeur moyenne géométriquement mobile à l'aide de la formule :

$$LMW_n(t) = \frac{((n-1) \times LMW_n(t-1) + LW(t))}{n} \quad = \quad \frac{1}{n}\sum_{i=1}^{\infty}(\frac{n-1}{n})^i \times LW(t-i)$$

dans laquelle :

$LMW_n(0) = 0$
$LW(t)$ : la valeur de charge au moment t
n: le nombre de moments t auxquels a lieu une détermination.

5. Procédé selon l'une quelconque des revendications précédentes, dans lequel un contrôleur de logique floue met en oeuvre au moins les règles de logique floue indiquées ci-après :

  lorsque LW et LMW représentent des valeurs faibles, on réduit la valeur LAW,
  lorsque LW et LMW représentent des valeurs moyennes, on réduit légèrement la valeur LAW,
  lorsque LW et LMW représentent une charge élevée, on réduit légèrement la valeur LAW,
  lorsque LW et LMW représentent la charge nominale, on laisse telle quelle la valeur LAW,
  lorsque LW et LMW représentent une légère surcharge, on augmente légèrement la valeur LAW,
  lorsque LW et LMW représentent une surcharge, on augmente la valeur LAW,
  lorsque LW et LMW représentent une forte surcharge, on augmente fortement la valeur LAW,
  lorsque LW et LMW représentent une très forte surcharge, on augmente très fortement la valeur LAW,

  LW représentant la valeur de charge
  LMW représentant la valeur de charge moyenne
  LAW représentant le délestage de charge.

6. Procédé selon l'une quelconque des revendications précédentes, en utilisant au moins les règles de logique floue indiquées ci-après, à une charge nominale de 0,8 :

| LW(t) / LMW(t) | 0.5 | 0.6 | 0.7 | 0.8 | 0.85 | 0.9 | 0.95 | 1.05 |
|---|---|---|---|---|---|---|---|---|
| 0.5 | -1 | -1 | -1 | 0.5 | 1 | 1 | 2 | 3 |
| 0.6 | -1 | -1 | -1 | 0.5 | 0 | 0 | 1 | 1 |
| 0.7 | -1 | -1 | -1 | 0.5 | 0 | 0 | 1 | 1 |
| 0.8 | -1 | -0.5 | -0.5 | 0 | 0 | 0 | 0 | 1 |
| 0.85 | -1 | -0.5 | 0 | 0 | 0 | 0 | 0 | 1 |
| 0.9 | -0.5 | 0 | 0 | 0 | 0 | 0 | 0.5 | 1 |
| 0.95 | -0.5 | 0 | 0 | 0 | 0 | 0.5 | 1 | 2 |
| 1.0 | 0 | 0 | 0 | 0 | 0 | 1 | 1 | 2 |

LA ↘

dans lequel, en ce qui concerne les règles de logique floue, les grandeurs de commande de charge LA requièrent:

| LA | -1 | une diminution du délestage de charge |
|---|---|---|
| LA | -0,5 | une légère diminution du délestage de charge |
| LA | 0 | un statu quo du délestage de charge |
| LA | +0,5 | une légère augmentation du délestage de charge |
| LA | +1 | une augmentation du délestage de charge |
| LA | +2 | une forte augmentation du délestage de charge |
| LA | +3 | donner l'alarme. |

**7.** Procédé selon l'une quelconque des revendications 1 à 5, en utilisant au moins les règles de logique floue indiquées ci-après, à une charge nominale de 0,7 :

LA ↘

| LW(t) / LMW(t) | 0.4 | 0.5 | 0.6 | 0.7 | 0.8 | 0.85 | 0.9 | 0.95 |
|---|---|---|---|---|---|---|---|---|
| 0.5 | -1.5 | -1 | -1 | 1 | 0 | 1 | 1 | 2 |
| 0.6 | -1.5 | -1 | -1 | 1 | -0.5 | 0 | 0 | 1 |
| 0.7 | -1.5 | -1 | -1 | 1 | -0.5 | 0 | 0 | 1 |
| 0.8 | -1 | -1 | -0.5 | 0.5 | 0 | 0 | 0 | 0 |
| 0.85 | -1 | -1 | -0.5 | 0 | 0 | 0 | 0 | 0 |
| 0.9 | -0.5 | -0.5 | 0 | 0 | 0 | 0 | 0 | 0.5 |
| 0.95 | -0.5 | -0.5 | 0 | 0 | 0 | 0 | 0.5 | 1 |
| 1.0 | 0 | 0 | 0 | 0 | 0 | 0 | 1 | 1 |

dans lequel, en ce qui concerne les règles de logique floue, les grandeurs de commande de charge LA requièrent :

| LA | -1 | une diminution du délestage de charge |
|---|---|---|

(suite)

| | | |
|---|---|---|
| LA | -0,5 | une légère diminution du délestage de charge |
| LA | 0 | un statu quo du délestage de charge |
| LA | +0,5 | une légère augmentation du délestage de charge |
| LA | +1 | une augmentation du délestage de charge |
| LA | +2 | une forte augmentation du délestage de charge |
| LA | +3 | donner l'alarme. |

**8.** Procédé selon l'une quelconque des revendications 1 à 5, en utilisant au moins les règles de logique floue indiquées ci-après, à une charge nominale de 0,95 :

| LW(t) / LMW(t) | 0.6 | 0.7 | 0.8 | 0.85 | 0.9 | 0.95 | 1.0 | 1.05 |
|---|---|---|---|---|---|---|---|---|
| 0.5 | -2 | -1.5 | 0 | 1 | 1 | 2 | 2.5 | 3 |
| 0.6 | -1.5 | -1 | -0.5 | 0 | 0 | 1 | 2 | 1 |
| 0.7 | -1 | -1 | -0.5 | 0 | 0 | 1 | 1.5 | 1 |
| 0.8 | -1 | -1 | 0 | 0 | 0 | 0 | 1 | 1 |
| 0.85 | -1 | -1 | 0 | 0 | 0 | 0 | 0.5 | 1 |
| 0.9 | -0.5 | -0.5 | 0 | 0 | 0 | 0.5 | 0 | 1 |
| 0.95 | -0.5 | 0 | 0 | 0 | 0.5 | 1 | 1.5 | 2 |
| 1.0 | 0 | 0 | 0 | 0 | 1 | 1 | 1.8 | 2 |

LA →

dans lequel, en ce qui concerne les règles de logique floue, les grandeurs de commande de charge LA requièrent :

| | | |
|---|---|---|
| LA | -1 | une diminution du délestage de charge |
| LA | -0,5 | une légère diminution du délestage de charge |
| LA | 0 | un statu quo du délestage de charge |
| LA | +0,5 | une légère augmentation du délestage de charge |
| LA | +1 | une augmentation du délestage de charge |
| LA | +2 | une forte augmentation du délestage de charge |
| LA | +3 | donner l'alarme. |

**9.** Procédé selon l'une quelconque des revendications précédentes, dans lequel on utilise, à titre d'unité centrale de traitement en temps réel, un processeur de contrôle de commutation pour des correspondants de communications.

ER

LW

D

LMW LW

LA

ST